# EUROPEAN PATENT SPECIFICATION

(11) **EP 4 511 187 B1**
(45) Date of publication and mention of the grant of the patent: **30.09.2026**
(21) Application number: 23723663.3
(22) Date of filing: 20.04.2023
(51) Int. Cl.: B23K 26/035, B23K 26/046, B23K 26/06, B23K 26/082, B23K 26/08, B23K 26/22

(54) **LASER WELDING SYSTEM AND LASER WELDING METHOD**
LASERSCHWEISSSYSTEM UND -VERFAHREN
SYSTÈME ET MÉTHODE DE SOUDAGE PAR LASER

(30) Priority: 21.04.2022 US 202263333314 P
(43) Date of publication of application: 26.02.2025
(73) Proprietor: IPG Photonics Corporation, Marlborough, MA 01752 (US); IPG Laser GmbH & Co. KG, 57299 Burbach (DE)
(72) Inventor: SCHRAMM, Ingo, Webster Road Oxford, Massachusetts 01540 (US)
(74) Representative: Kobiako von Gamm, Iouri
(86) International application number: PCT/IB2023/054046
(87) International publication number: WO 2023/203516

(56) References cited:
- DE-U1- 202021 100 154
- JP-A- 2012 115 876
- JP-A- 2020 097 050
- KR-A- 20200 050 918
- US-A1- 2013 220 983
- US-A1- 2015 266 130

## Description

The present invention relates in general to so-called spot laser welding of overlapping metal workpieces. In particular, the present invention relates to a laser welding system, and a laser welding method (see respectively claims 1 and 8), which enable an efficient spot welding of overlapping metal workpieces. It should be noted that the expressions spot laser welding and point laser welding can be used interchangeably in the context of the present invention.

### Background of the Invention

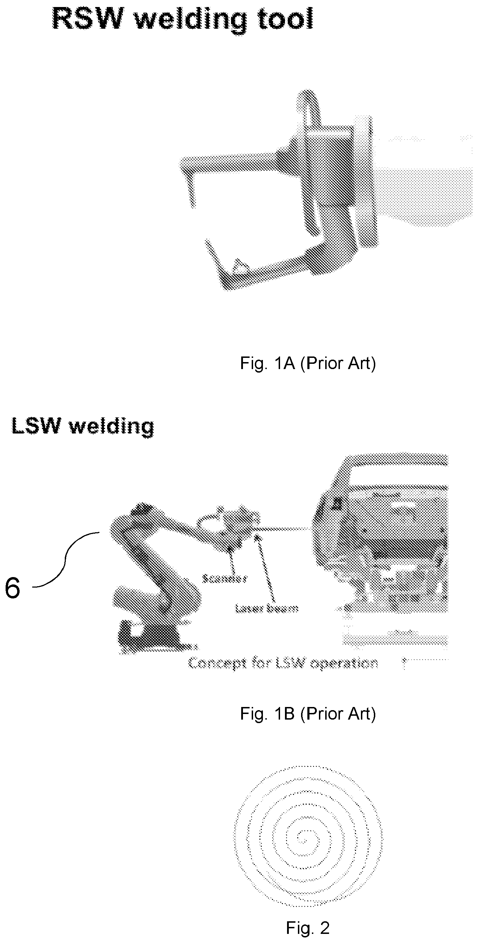

Several techniques are applied in the sheet metal welding industry, in particular the automobile industry, to join two or more overlapping pieces of metal materials, especially of overlapping metal sheets. For example, resistance spot welding (RSW) is a type of electric resistance welding for welding various sheet metal products, through a process in which contacting metal surface points are joined by the heat obtained from resistance to electric current. In this process, the sheet meal workpieces are held together under pressure exerted by electrodes. Forcing a large current through the spot between the electrodes melts the metal and forms a spot weld or a point weld. An illustration of an exemplary RSW system in shown for example in Fig. 1A.

However, the resulting surface of the spot weld is usually rough, such that the welded spot can be prone to oxidation which is a concern in the automotive industry. Further, the motion sequence of electrodes, namely opening and closing of electrodes, slow down the RSW process. Moreover, a typically bulky design of the welding head in RSW systems prevents an easy access to welding spots. For example, body panels of an automobile are transported to a welding station where a clamping system is imposed to hold the body panels, while the welding operations are performed. Due to the configuration of some of the parts to be welded, certain clamping and welding apparatuses cannot be utilized as spatial restrictions may limit the amount of space available for the necessary maneuvering and the proper functioning of the clamping and welding apparatuses.

In order to improve the quality of spot welds, laser spot welding techniques have been developed. Laser spot welding (LSW) is a welding process that uses the power of a laser beam to join two metal surfaces at a spot or point. The laser beam targets a small spot and transfers enough energy to melt and fuse metal surfaces together. For example, European Patent Application No. EP 2 701 875 A1 describes a so-called laser screw welding process in which a high-power laser beam incident on a plurality of metal sheets is scanned such that the laser beam is rotated about an axis perpendicular to a surface of the sheets, thereby forming a melt pool in the plurality of sheets. However, in order to ensure sufficient proximity or contact between metal sheets, the metal sheets need to be pressed against each other by separate supplementary devices.

An example of a LSW system according to the prior art is illustrated in Fig. 1B.

In order to avoid the use of such separate pressing or clamping devices, for example, International Patent Application No. WO 2014/063151 A1 belonging to the same applicant as the present invention describes a so-called laser seam stepper (LSS) equipped with a so-called C-gun structure. Unlike in laser spot welding, surfaces of the overlapping workpieces are welded over a long, continuous surface in laser seam welding. Such a laser seam stepper has similar disadvantage as the aforementioned RSW systems. Namely, the opening and closing of the C-gun parts slows down the welding process. Similarly, a bulky design of the weld head in the laser seam stepper also prevents an easy access to welding locations. Moreover, the laser welding devices described in WO 2014/063151 A1 are not suitable for a so-called "on-the-fly" welding mode which is faster than said RSW and laser welding stepper with C-gun applications.

US 2013/220 983 A1 (describing the preamble of claims 1 and 8) shows a device for joining workpieces by means of a laser beam, comprising: a scanner optics for guiding the laser beam; a press element, which, during the joining process, is pressed along a pressing direction onto at least one of the workpieces; and a housing, which houses the scanner optics and the laser beam running from the scanner optics towards the workpieces. The press element forms a part of the housing and is movable relative to the rest of the housing by at least one degree of movement freedom.

DE 20 2021 100 154 U1 discloses a laser processing system with a workpiece support for receiving a workpiece to be processed, a workpiece holding device for holding the workpiece to be processed and a processing head which is movable relative to the workpiece support and on which laser optics for focusing a laser beam onto the workpiece to be processed is arranged. The workpiece holding device contains a pressure element arranged on the processing head with a pressure head which comes to rest on the workpiece in the region of the focus position of the laser beam.

US 2015/266 130 A1 describes a hand displaceable laser welding gun configured with an elongated support column extending along a longitudinal axis and made from lightweight material. A support plate is displaceably mounted to the column while supporting thereon an optical head axially which is provided with optics. The optics is configured to direct a laser beam along a path towards a welding zone through a protective window of the optical head. The laser welding gun further is structured with a first arm mounted to the support plate and extending along a longitudinal axis of the gun diametrically opposite to the optical head. The inner surface of the displaceable arm has an inner surface defining a tunnel which is aligned with the optical head and axially traversed by the laser beam, a first axially flowing stream of pressurized gaseous medium, and a second axially flowing stream of gaseous medium.

KR 2020 0050 918 A1 provides a laser spot welding apparatus including: a base frame on which a driving member is installed; a lifting frame connected to the driving member and lifted and lowered by the driving member; a laser head installed on the lifting frame and emitting a laser beam to an object to be welded; a holding unit connected to the lifting frame so that the laser beam passes through a hollow, and pressing and holding the upper surface of the object to be welded; and a clamp arm supporting the lower surface of the object to be welded and configured to be attached to and detached from the base frame.

JP 2020-097 050 A teaches a laser seam welding gun and a laser seam welding system. The laser seam welding gun comprises: a stationery side pressurized terminal assembly which is so fitted to a tip of a stationery arm as to face a tip of a movable arm and in which a guiding hole, through which laser beam passes, is formed in a state of penetrating in an axial direction; a movable side pressurized terminal which is so fitted to the tip of the movable arm as to face the tip of the stationery arm, and pinches a work-piece at a prescribed pressure between itself and the stationery side pressurized terminal assembly; and a mounting stay which holds a trepanning head constituting a laser system, which guides laser beam oscillated by a laser oscillator to the stationery side pressurized terminal assembly, irradiates a pinched part of the work-piece pinched between the stationery side pressurized terminal assembly and the movable side pressurized terminal with a laser beam in in the axial direction, thereby performing seam-welding of the irradiated part, to the stationery arm.

### Problem to be Solved by the Invention

The present invention intends to overcome the problems of the prior art and provide a laser welding system and a laser welding method which allows to perform contact welding of metal sheets without damaging the surface of the workpiece. Furthermore, it is an object of the present invention to increase the speed of the welding process.

### Solution According to the Invention

According to a first aspect, the present invention provides a laser welding system according to claim 1. According to a second aspect, the present invention provides a laser welding method according to claim 8. Further aspects of the invention are set forth in the dependent claims, the drawings, and the following description of preferred embodiments.

The inventive laser welding system, also called laser seam pointer (LSP) is a welding tool with a laser adapted for producing point welding connections as a direct alternative to a resistance spot welding connection or a laser screw welding process. However, a laser welding system according to the present invention may also be adapted to carry out a laser screw welding process.

The LSP can be used, for example, for producing overlapping sheet metal connections in applications of the automotive industry as well as in the rest of the sheet metal processing industry. Achievable advantages of the LSP according to this invention are the significantly better accessibility to the welding point compared to the laser seam stepper (LSS) welding head. In direct comparison with a resistance spot welded (RSW) connection, the welding time can be reduced and, if the components permit, the down and up movement of a shaft from the welding tool can be dispensed. In direct comparison with the laser screw welding process (LSW), it is possible with the laser seam pointer (LSP) to press the components together without a gap in order to achieve an optimal welding result.

In terms of size, appearance and durability, an RSW and the LSW point weld can be compared to an LSP point weld. Due to the combination of the faster welding process and the potential savings in the movement sequence (opening/closing), the total time for the welding and movement cycle can be reduced, for example from approximately 3.5 seconds for an RSW point weld to approximately 1.5 seconds for the LSP point weld.

Due to the design of the inventive LSP tool and associated closed beam guidance up to the welding point or just before the welding point, the dirt and emissions produced during the welding can be extracted directly at the point or origin with the help of an adaptable suction.

The inventive system, head and method can be used in places where connections are made with resistance welding guns or laser for screw welding processes today. Coated sheet metal combinations can be welded as well as uncoated sheets. Due to the one-side accessibility, sub-floor assemblies (sheets on profile) can be welded.

The following describes parameters of an exemplary LSP laser welding system.

### LSP-3500 Welding-System

### Base

- Producing round point welding connections like in a spot-welding process or in a laser screw welding process
- In terms of size, appearance and durability an LSP point can be compared 1:1 to an RSW or an LSW point

### Advantages

- Accessibility to the component is significantly better than with an LSS-System.
- More than twice as fast as the RSW process.
- Intact component surface. No surface damage caused by the electrode sliding effect at RSW process.
- Smooth surfaces of the components deliver significantly better results in the corrosion test.
- In contrast to the LSW process, the components can be pressed together with the LSP. Thus, no additional, expensive clamping unit is required.
- No additional fixation points are necessary. In the LSW process, additional fixation can be necessary as before with RSW-welding tools.
- Welding process is optionally possible without pressing, therefore allowing to perform remote welding as well.
- First fix the components are with pressure, then they are welded on the fly.
- No dust and dirt due to the connected suction instead of the laser screw welding process
- Compact 19" rack laser with full control of laser, welding tool and optional fumator and/or cleaning station
- Only one HMI interface for program creation, visualization, log data.

The laser welding system according to the invention is configured for producing point welding connections, in particular between overlapping workpieces. For example, at least parts of the workpieces overlap, such that by performing a screw welding process (SWP) on one or more surfaces of the workpieces generates a spot weld between the workpieces to join the workpieces.

In the present description, the expression "a surface of the workpieces" can mean that when two or more overlapping metal sheets are welded together, the laser beam only directly hits one surface.

A connection unit of the laser head is mechanically connected to a positioning device of the laser welding system for moving the laser welding head with respect to the workpieces. The positioning device may be configured for moving the laser head in space with three, four, five or six degrees of freedom. For this purpose, the positioning device may comprise plural translation and/or rotation stages, in particular for linear movements in three orthogonal directions and three degrees of rotation.

A mechanical shaft surrounds at least a portion of the output laser beam. A pressure piece is connected to the mechanical shaft and comprises a front surface for applying a pressure onto the surface of the workpieces. In other words, the front surface of the pressure piece can be pressed against a surface of the workpieces.

In a first operating state, the laser welding head is configured for simultaneously applying a pressure onto the surface of the workpiece with the pressure piece and carrying out a screw welding process.

In a second operating state, the laser welding head may be configured for carrying out the screw welding process (SWP) without applying pressure onto the surface of the workpieces. In particular, the SWP may be performed with a distance between the laser welding head and the surface of the workpieces. In this operating state, no pressure is applied onto the surface of the workpieces. In other words, the pressure piece may not contact the workpieces in the second operating state. Thus, the laser welding head can be operated in at least two different operating states, with and without applying pressure onto the workpieces.

For example, when welding without applying pressure by the pressure piece, the workpieces may even be welded together with a gap between the workpieces.

In the first operating state, the optics unit may be configured for adjusting the focus of the output laser beam in a plane of the front surface of the pressure piece. As a result, the SWP can be performed on the same surface which is contacted by the pressure piece. As a result, a contact welding connection between the workpieces can be generated by the SWP.

In the second operating state, the optics unit may be configured for adjusting the focus of the output laser beam in a plane of the surface of the workpieces having a distance from the pressure piece.

The mechanical shaft may be configured for extending and/or retracting its length along the axis of the output laser beam. By extending the mechanical shaft, the pressure on the workpieces may be applied and/or controlled. The motion of extending and/or retracting the mechanical shaft can be achieved my means of an electric motor such as a servo motor or the like or by a hydraulic or pneumatic actuator. As a result, the generated pressure may be controlled with high speed and high precision. Moreover, large pressures can be exerted onto the workpieces in order to ensure contact between the workpieces, thus allowing to generate a strong connection between the workpieces.

The mechanical shaft may comprise a proportional valve controlled by the control unit for extending and/or retracting the length of the mechanical shaft. In this case, the proportional valve may control the hydraulic or pneumatic actuator.

The mechanical shaft may comprise a pressure sensor for measuring the pressure applied to the surface of the workpieces. A signal generated by the pressure sensor may be fed to the control unit of the laser head which may feedback-control the motion of the mechanical shaft, for example by controlling the proportional valve.

The control unit may be configured for controlling the pressure applied by the mechanical shaft to the surface of the workpieces based on a pressure sensor signal provided by the pressure sensor. As a result, the pressure may be controlled with high precision to ensure sufficient contact between the workpieces while avoiding damage of the workpieces.

A protective glass may be provided between the mechanical shaft and the optics unit. The protective glass may prevent weld fumes and other contaminants to enter the optics unit. Thus, contamination of the optics and possible damage of the optics may be prevented.

The mechanical shaft may comprise an over jet nozzle for providing a gas flow onto the protective glass. As a result, it can be prevented that dust, weld fumes or other particles and/or contaminants adhere to the protective glass. Thus, damage of the protective glass and/or a deterioration of the laser beam quality may be prevented.

The pressure piece may comprise a fume extraction unit for extracting weld fumes generated during the welding process. As a result, contamination of optics, the pressure piece, the protective glass, the workpieces and/or other components of the laser welding system can be efficiently prevented. Moreover, contamination of the surrounding ambient air may be reduced in order to avoid health risks for operators of the welding system or other workers in the vicinity of the laser welding system.

The laser welding system may comprise a high-power laser source providing a high-power laser output beam such as a fiber laser which may output several kilowatts of laser power in single mode or multimode laser operation at a suitable laser wavelength.

Preferably, the laser welding system comprises a fixture for holding the workpieces. The fixture may be positioned on one or more translation and/or rotation stages for positioning the workpieces relative to the laser welding head.

The laser welding system may comprise a control system for controlling operation of the laser welding system. The control system may act as a higher-level control system which also controls the control unit of the laser welding head. Moreover, the control system may control the motion of the positioning system. Furthermore, the control system may control operation of the high-power laser source.

### Brief Description of the Drawings

The invention is illustrated in greater detail with the aid of schematic drawings.
- Figure 1A:: Fig. 1A illustrates an example of the known resistance spot welding (RSW) tool.
- Figure 1B:: Fig. 1B illustrates an example of the known laser screw welding (LSW) system.
- Figure 2:: Fig. 2 shows an example of the laser beam movement pattern on the surface of the workpieces to be welded.
- Figure 3:: Fig. 3 is an external view of a laser head in a laser seam pointer (LSP) system according to the present invention.
- Figure 4:: Fig. 4 is an exploded view of the laser head in a laser seam pointer (LSP) system according to the present invention.
- Figure 5:: Fig. 5A is an external view and Fig. 5B is cross-section along line A-A of the laser head in a laser seam pointer (LSP) system according to the present invention.
- Figure 6:: Fig. 6 shows an example of the inventive laser seam pointer (LSP) system in a first operating state.
- Figure 7:: Fig. 7 shows an example of the inventive laser seam pointer (LSP) system in a second operating state.
- Figure 8:: Fig. 8 shows an example of the point (spot) welding connections manufactured by the laser seam pointer (LSP) system according to the present invention.

### Detailed Description of Embodiments

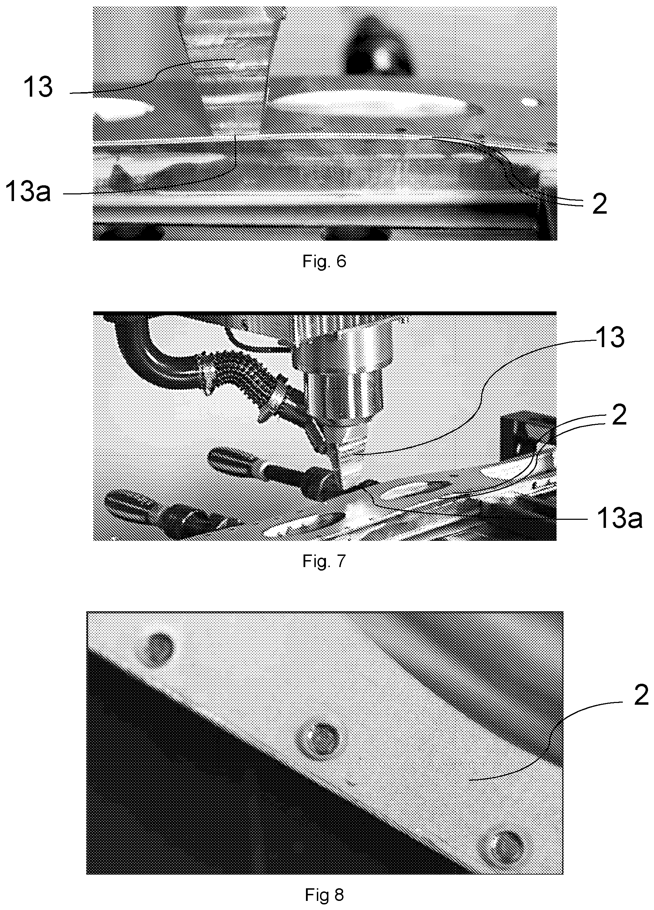

Fig 2 shows an exemplary spiral trace which is scanned by the laser beam spot on the workpiece surface when performing laser screw welding. Such a trace in a screw welding process can be used to create a point-like spot weld between sheet metal workpieces as shown e.g. in Fig. 8.

### Welding Process

In order to obtain the round shape similar to a resistance welding point or laser screw welding point, an optical system is used that can position the laser beam, for example by means of scanning mirrors which may be controlled using actuators which may comprise piezo elements or servo motors. According to the art, a trace of a laser screw weld usually resembles a spiral as depicted in Fig. 2.

The shape, direction of movement, laser power adjustment during movement and speed can be freely selected in order to optimize the resulting spot weld.

### Basic process data:

Exemplary laser power may range from several Watts to several Kilowatts, for example 3,5 kW maximum peak power. The scanning speed of the laser beam may range between for example 60 mm/s to 250 mm/s. The resulting diameter of the spot-weld may range between for example 1 mm to 7mm.

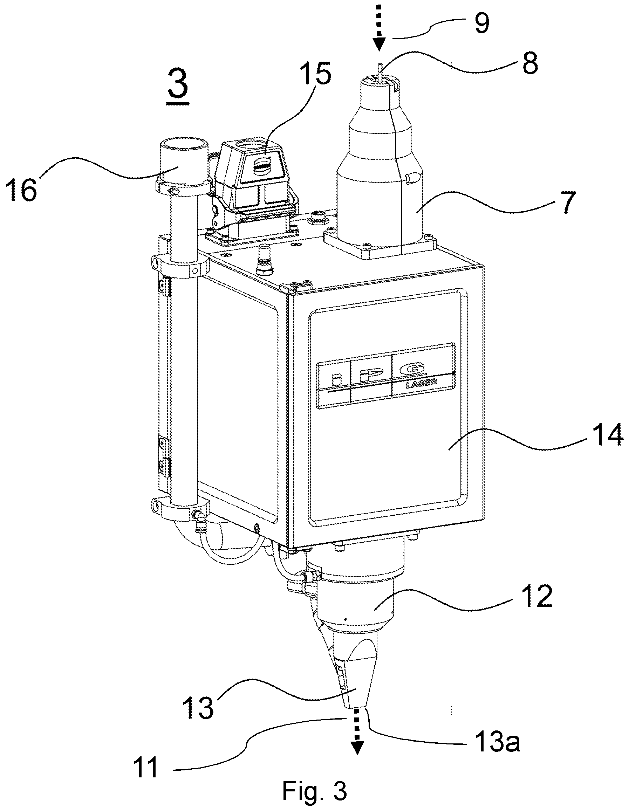

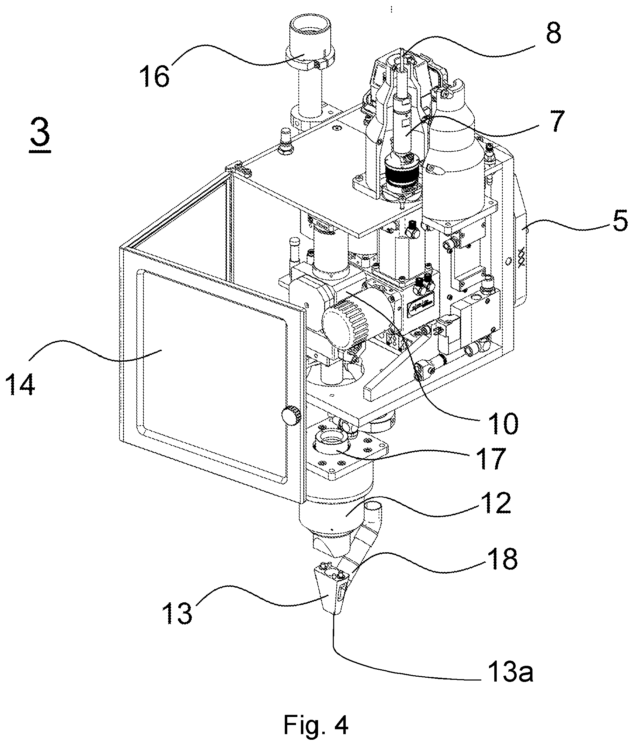

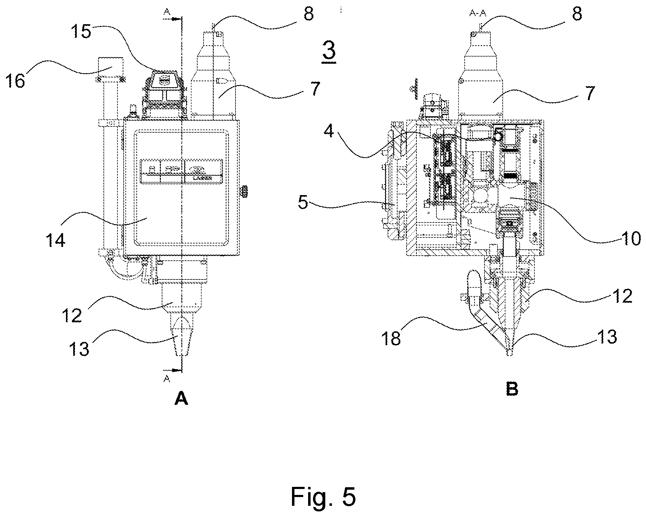

Figs. 3 to 5 illustrate an embodiment of a laser welding system 1 according to the present invention for producing point welding connections on overlapping workpieces 2 (not depicted in Figs. 3 to 5). The laser welding system 1 comprises a laser welding head 3. Fig. 3 shows an outside perspective view of the laser head 3. Fig. 4 shows an exploded view of the laser welding head 3. Fig. 5A shows front plan view and Fig. 5B shows a cross section along line A-A.

The laser head 3 comprises a housing 14, a control unit 4 (see Fig. 5B), a connection unit 5, a laser beam delivery unit 7, an optics unit 10, a mechanical shaft 12, and a pressure piece 13. On the backside of the housing 14, a connection unit 5 is provided to attach the laser head 3 to a positioning device which can translate and rotate the laser head 3.

Control electronics of the control unit 4 are visible in the cross-sectional view of Fig. 5B. The control unit 4 controls operation of the laser welding head 3 including scanning optics such as mirrors of the optics unit 10 and a motion of the mechanical shaft 12. The connection unit 5 can mechanically connect the laser head 3 to a positioning device 6 of the laser welding system 1 for moving the laser welding head 3 with respect to the workpieces 2.

The laser beam delivery unit 7 is connected to an optical fiber 8 providing an input laser beam 9. In particular, the laser beam delivery unit 7 comprises a fiber coupler for connecting the optical fiber 9 and a collimation lens for collimating the input laser beam.

The optics unit 10 comprises a plurality of optical components for receiving the input laser beam 9 and delivering an output laser beam 11 to a surface of the workpieces 2. Here, the optics unit 10 may comprise at least two scanning mirrors for scanning the output laser beam in two directions across the surface of the workpieces. Furthermore, the optics unit 10 may comprise at least one focusing lens to focus the output laser beam onto the surface of the workpieces.

Furthermore, cameras and sensors may be provided to analyze the beam quality. Moreover, polarizing optics may be used to control a polarization of the output beam.

The optics unit 10 is configured for focusing the output laser beam 11 onto the surface of the workpieces 2 and for scanning the output laser beam 11 across the surface of the workpieces 2.

The mechanical shaft 12 surrounds at least a portion of the output laser beam 11. A pressure piece 13 is connected to the mechanical shaft 12. The pressure piece 13 comprises a front surface 13a for applying a pressure onto the surface of the workpieces 2.

In a first operating state, the laser welding head 3 can simultaneously apply a pressure onto the surface of the workpiece 2 with the pressure piece 13 and carry out a welding process such as a screw welding process by scanning the laser beam across the surface of the workpieces, for example following a spiral trace as illustrated in Fig. 2. Of course, also traces with other suitable shapes may be used.

In a second operating state, the laser welding head can carry out the screw welding process without applying pressure onto the surface of the workpieces 2. In this second operating state, a distance welding process may be carried out.

In the first operating state, the optics unit 10 can adjust the focus of the output laser beam 11 to lie in a plane of the front surface 13a of the pressure piece 13. Since the front surface 13a of the pressure piece 13 contacts the surface of the workpieces, the laser focus will lie on the surface of the workpieces, such that the surface is heated and melted to create the weld.

in the second operating state, the optics unit 10 can adjust the focus of the output laser beam 11 such, that the focus lies in a plane of the surface of the workpieces 2 having a distance from the pressure piece 13.

The mechanical shaft 12 is, according to the present invention, configured to extend and retract its length along the axis of the output laser beam. By extending the mechanical shaft, the force of the applied pressure can be controlled with high precision.

The mechanical shaft 12 comprises a proportional valve controlled by the control unit 4 for extending and/or retracting the length of the mechanical shaft 12. The mechanical shaft 12 comprises a pressure sensor for measuring the pressure applied to the surface of the workpieces 2.

The control unit 4, see Fig. 5B, is configured for controlling the pressure applied by the mechanical shaft 12 to the surface of the workpieces 2 based on a pressure sensor signal provided by the pressure sensor. The control unit 4 can be connected to a higher-level control system of the laser welding system 1 via the control line connection 15 which is provided on the outside of housing 14.

A protective glass 17 is provided between the mechanical shaft 12 and the optics unit 10 and protects the optics of the optics unit 10 from dust, weld fumes and other contaminants.

The mechanical shaft 12 comprises an over jet nozzle for providing a gas flow onto the protective glass. The pressure piece 13 comprises a fume extraction unit 18 for extracting weld fumes generated during the welding process.

Reference sign 16 indicates a connection line for providing hydraulics or pneumatics for the valve or suction for the fume extraction unit.

A large portion of the laser beam is guided through the mechanical shaft 12, which takes on several tasks at the same time. By surrounding the laser beam, the mechanical shaft 12 acts as a protection device which prevents unwanted interactions between the laser beam and other objects. Thus, the mechanical shaft 12 can improve a safe operation of the laser welding system 1.

Furthermore, the mechanical shaft 12 can be extended in length by up to 12 mm using a proportional valve. This value is only an example and not intended to limit the scope of the invention. In other embodiments the length of the mechanical shaft 12 may be varied within a range of ±10 mm, ±15 mm, ±20 mm, ±25 mm, ±30 mm, or up to ±50 mm.

On the other hand, the mechanical shaft 12 can be used as a pressure tool to join sheet metal pairings of the workpieces together. When using the press function, an air cushion may be pressed with a maximum force of up to, for example, 1 kN. For pressing the workpieces, the mechanical shaft 12 comprises the pressure piece 13.

The mechanical shaft 12 also comprises a so-called over jet, which protects the protective glass of the optics from dirt and smoke from the welding process. The compressed air consumption can be reduced to a minimum due to the design of the overjet nozzle and can be lowered by a factor of two compared to standard high-power scanner optics with large beam exit surfaces, which are used in laser screw welding processes.

The pressure piece 13 can be connected with an optional fume extraction and/or an overjet nozzle. In this case the surface of the welded part of the workpiece and the welding area is much cleaner compared to the LSW process. The emission load from welding fumes and the environment can be significantly reduced. The pressure piece 13 touches down with its smooth surface 13a without damaging the surface of the workpieces 2 or leaving a sliding mark as can be case in the RSW process.

Figs. 6 and 7 illustrate the first and second operating state of the welding head 3, respectively. As can be seen in Fig. 6, the front surface 13a of the pressure piece 13 contacts the surface of the workpieces 2. On the other hand, Fig. 7 shows the second operating state in which a distance welding process is carried without contact between the pressure piece 13 and the surface of the workpieces.

### List of Reference Numerals

- 1.: laser welding system
- 2.: workpiece
- 3.: laser welding head
- 4.: control unit
- 5.: connection unit
- 6.: positioning device
- 7.: laser beam delivery unit
- 8.: optical fiber
- 9.: input laser beam
- 10.: optics unit
- 11.: output laser beam
- 12.: mechanical shaft
- 13.: pressure piece
- 13a: front surface of the pressure piece
- 14: housing
- 15: control line connection
- 16: connection to hydraulics/pneumatics/suction
- 17: protective glass
- 18: fume extraction unit

## Claims

1. Laser welding system (1) for producing point welding connections on overlapping workpieces (2), wherein the laser welding system (1) comprises a laser source, a laser welding head (3), the laser welding head (3) comprising:
a control unit (4) for controlling operation of the laser welding head (3);
a connection unit (5) mechanically connected to a positioning device (6) of the laser welding system (1) for moving the laser welding head (3) with respect to the workpieces (2);
a laser beam delivery unit (7) connected to an optical fiber (8) providing an input laser beam (9);
an optics unit (10) comprising a plurality of optical components for receiving the input laser beam (9) and delivering an output laser beam (11) to a surface of the workpieces (2),
wherein the optics unit (10) is configured for focusing the output laser beam (11) onto the surface of the workpieces (2) and for scanning the output laser beam (11) across the surface of the workpieces (2);
a mechanical shaft (12) surrounding at least a portion of the output laser beam (11) and configured for extending and/or retracting its length along the axis of the output laser beam; and
the laser welding system being **characterised by**:
one pressure piece (13) connected to the mechanical shaft (12), wherein:
the one pressure piece (13) comprises a front surface (13a) for applying a pressure from the front surface side onto the surface of the workpieces (2),
in a first operating state, the laser welding head (3) is configured for simultaneously applying a pressure onto the surface of the workpiece (2) with the one pressure piece (13) and carrying out a screw welding process,
the mechanical shaft (12) comprises:
a proportional valve controlled by the control unit (4) for extending and/or retracting the length of the mechanical shaft (12); and
a pressure sensor for measuring the pressure applied to the surface of the workpieces (2), and
the control unit (4) is configured for controlling the pressure applied by the mechanical shaft (12) to the surface of the workpieces (2) based on a pressure sensor signal provided by the pressure sensor.

2. Laser welding system (1) according to claim 1, wherein, in a second operating state, the laser welding head (3) is configured for carrying out the screw welding process without applying pressure onto the surface of the workpieces (2).

3. Laser welding system according to claim 2, wherein:
in the first operating state, the optics unit (10) is configured for adjusting the focus of the output laser beam (11) in a plane of the front surface (13a) of the one pressure piece (13); and
in the second operating state, the optics unit (10) is configured for adjusting the focus of the output laser beam (11) in a plane of the surface of the workpieces (2) having a distance from the one pressure piece (13).

4. Laser welding system (1) according to one of the preceding claims, wherein a protective glass (17) is provided between the mechanical shaft (12) and the optics unit.

5. Laser welding system (1) according to claim 4, wherein the mechanical shaft (12) comprises an over jet nozzle for providing a gas flow onto the protective glass.

6. Laser welding system (1) according to one of the preceding claims, wherein the one pressure piece (13) comprises a fume extraction unit for extracting weld fumes generated during the welding process.

7. Laser welding system (1) according to one of the preceding claims, the laser welding system (1) further comprising:
the laser source being a high-power laser source providing a high-power laser output beam the positioning device (6) for moving the laser welding head with respect to the workpieces (2);
a fixture for holding the workpieces (2); and
a control system for controlling operation of the laser welding system (1).

8. Laser welding method for welding workpieces (2), the method being **characterised by** the following:
operating the laser welding system (1) according to one of claims 1 to 7 to position the laser welding head (3) relative to the workpieces (2);
applying pressure onto a surface of the workpieces (2) by means of a front surface (13a) of the one pressure piece (13) of the laser welding head (3) from the front surface side, wherein the pressure is applied by the mechanical shaft (12) to the surface of the workpieces (2) based on a pressure sensor signal provided by the pressure sensor;
scanning a position of a laser output beam of the laser welding head (3) on the surface of the workpieces (2) while applying pressure onto the surface of the workpieces (2) to carry out a screw welding process; and
releasing the pressure onto the workpieces (2).

## Patentansprüche

1. Laserschweißsystem (1) zum Herstellen von Punktschweißverbindungen an überlappenden Werkstücken (2), wobei das Laserschweißsystem (1) eine Laserquelle, einen Laserschweißkopf (3) umfasst, wobei der Laserschweißkopf (3) umfasst:
eine Steuereinheit (4) zum Steuern des Betriebs des Laserschweißkopfs (3);
eine Verbindungseinheit (5), die mit einer Positionierungsvorrichtung (6) des Laserschweißsystems (1) mechanisch verbunden ist, um den Laserschweißkopf (3) in Bezug auf die Werkstücke (2) zu bewegen;
eine Laserstrahl-Zuführungseinheit (7), die mit einer Lichtleitfaser (8), die einen Eingangslaserstrahl (9) bereitstellt, verbunden ist;
eine Optikeinheit (10), die mehrere optische Komponenten zum Empfangen des Eingangslaserstrahls (9) und zum Zuführen eines Ausgangslaserstrahls (11) zu einer Oberfläche der Werkstücke (2) umfasst,
wobei die Optikeinheit (10) zum Fokussieren des Ausgangslaserstrahls (11) auf die Oberfläche der Werkstücke (2) und zum Abtasten des Ausgangslaserstrahl (11) über die Oberfläche der Werkstücke (2) konfiguriert ist;
eine mechanische Welle (12), die wenigstens einen Abschnitt des Ausgangslaserstrahls (11) umgibt und die dafür konfiguriert ist, ihre Länge entlang der Achse des Ausgangslaserstrahls auszufahren und/oder einzufahren; und
wobei das Laserschweißsystem **gekennzeichnet ist durch**:
ein Druckstück (13), das mit der mechanischen Welle (12) verbunden ist, wobei:
das eine Druckstück (13) eine vordere Oberfläche (13a) zum Ausüben eines Drucks von der Seite der vorderen Oberfläche auf die Oberfläche der Werkstücke (2) umfasst,
der Laserschweißkopf (3) dafür konfiguriert ist, in einem ersten Betriebszustand gleichzeitig mit dem einen Druckstück (13) einen Druck auf die Oberfläche des Werkstücks (2) auszuüben und einen Schraubschweißprozess auszuführen,
die mechanische Welle (12) umfasst:
ein Proportionalventil, das **durch** die Steuereinheit (4) gesteuert wird, um die Länge der mechanischen Welle (12) auszufahren und/oder einzufahren; und
einen Drucksensor zum Messen des auf die Oberfläche der Werkstücke (2) ausgeübten Drucks, und
die Steuereinheit (4) dafür konfiguriert ist, den **durch** die mechanische Welle (12) auf die Oberfläche der Werkstücke (2) ausgeübten Druck auf der Grundlage eines **durch** den Drucksensor bereitgestellten Drucksensorsignals zu steuern.

2. Laserschweißsystem (1) nach Anspruch 1, wobei der Laserschweißkopf (3) dafür konfiguriert ist, in einem zweiten Betriebszustand den Schraubschweißprozess auszuführen, ohne auf die Oberfläche der Werkstücke (2) Druck auszuüben.

3. Laserschweißsystem nach Anspruch 2, wobei:
die Optikeinheit (10) dafür konfiguriert ist, den Brennpunkt des Ausgangslaserstrahls (11) in dem ersten Betriebszustand in eine Ebene der vorderen Oberfläche (13a) des einen Druckstücks (13) einzustellen; und
die Optikeinheit (10) dafür konfiguriert ist, den Brennpunkt des Ausgangslaserstrahls (11) in dem zweiten Betriebszustand in eine Ebene der Oberfläche der Werkstücke (2) mit einem Abstand von dem einen Druckstück (13) einzustellen.

4. Laserschweißsystem (1) nach einem der vorhergehenden Ansprüche, wobei zwischen der mechanischen Welle (12) und Optikeinheit ein Schutzglas (17) vorgesehen ist.

5. Laserschweißsystem (1) nach Anspruch 4, wobei die mechanische Welle (12) eine Über-Strahl-Düse zum Bereitstellen einer Gasströmung auf das Schutzglas umfasst.

6. Laserschweißsystem (1) nach einem der vorhergehenden Ansprüche, wobei das eine Druckstück (13) eine Dampfextraktionseinheit zum Extrahieren von während des Schweißprozesses erzeugten Schweißdämpfen umfasst.

7. Laserschweißsystem (1) nach einem der vorhergehenden Ansprüche, wobei das Laserschweißsystem (1) ferner umfasst:
die Laserquelle, die eine Hochleistungslaserquelle, die einen Hochleistungs-Laserausgangsstrahl bereitstellt, ist;
die Positionierungsvorrichtung (6) zum Bewegen des Laserschweißkopfs in Bezug auf die Werkstücke (2);
eine Spannvorrichtung zum Halten der Werkstücke (2); und
ein Steuersystem zum Steuern des Betriebs des Laserschweißsystems (1).

8. Laserschweißverfahren zum Schweißen von Werkstücken (2), wobei das Verfahren durch das Folgende gekennzeichnet ist:
Betreiben des Laserschweißsystems (1) nach einem der Ansprüche 1 bis 7 zum Positionieren des Laserschweißkopfs (3) relativ zu den Werkstücken (2);
Ausüben von Druck auf eine Oberfläche der Werkstücke (2) mittels einer vorderen Oberfläche (13a) des einen Druckstücks (13) des Laserschweißkopfs (3) von der Seite der vorderen Oberfläche, wobei der Druck auf der Grundlage eines durch den Drucksensor bereitgestellten Drucksensorsignals durch die mechanische Welle (12) auf die Oberfläche der Werkstücke (2) ausgeübt wird;
Abtasten einer Position eines Laserausgangstrahls des Laserschweißkopfs (3) auf der Oberfläche der Werkstücke (2), während auf die Oberfläche der Werkstücke (2) Druck ausgeübt wird, um einen Schraubschweißprozess auszuführen; und
Abbauen des Drucks auf die Werkstücke (2).

## Revendications

1. Système de soudage par laser (1) destiné à réaliser des assemblages soudés par points sur des pièces superposées (2), le système de soudage par laser (1) comprenant une source laser et une tête de soudage laser (3), la tête de soudage laser (3) comprenant:
une unité de commande (4) destinée à commander le fonctionnement de la tête de soudage laser (3);
une unité de raccordement (5) reliée mécaniquement à un dispositif de positionnement (6) du système de soudage par laser (1), destinée à déplacer la tête de soudage laser (3) par rapport aux pièces à usiner (2 ;
une unité de transmission du faisceau laser (7) reliée à une fibre optique (8) fournissant un faisceau laser d'entrée (9);
une unité optique (10) comprenant une pluralité de composants optiques, destinée à recevoir le faisceau laser d'entrée (9) et à délivrer un faisceau laser de sortie (11) sur une surface des pièces à usiner (2);
dans lequel l'unité optique (10) est configurée pour focaliser le faisceau laser de sortie (11) sur la surface des pièces à usiner (2) et pour balayer le faisceau laser de sortie (11) à travers la surface des pièces à usiner (2);
un arbre mécanique (12) entourant au moins une partie du faisceau laser de sortie (11) et configuré pour allonger et/ou rétracter sa longueur suivant l'axe du faisceau laser de sortie (11); et
le système de soudage par laser étant **caractérisé par**:
une pièce de pression (13) reliée à l'arbre mécanique (12), dans laquelle:
la pièce de pression (13) comprend une surface frontale (13a) destinée à appliquer une pression, depuis le côté de la surface frontale, sur la surface des pièces à usiner (2);
dans un premier état de fonctionnement, la tête de soudage laser (3) est configurée pour appliquer simultanément une pression sur la surface de la pièce à usiner (2) au moyen de la pièce de pression (13) et effectuer un procédé de soudage par vis;
l'arbre mécanique (12) comprend:
une vanne proportionnelle commandée par l'unité de commande (4), destinée à allonger et/ou à rétracter la longueur de l'arbre mécanique (12); et
un capteur de pression destiné à mesurer la pression appliquée sur la surface des pièces à usiner (2), et
l'unité de commande (4) est configurée pour contrôler la pression exercée par l'arbre mécanique (12) sur la surface des pièces à usiner (2), sur la base d'un signal du capteur de pression fourni par le capteur de pression.

2. Système de soudage par laser (1) selon la revendication 1, dans lequel, dans un deuxième état de fonctionnement, la tête de soudage laser (3) est configurée pour réaliser le procédé de soudage par vis sans exercer de pression sur la surface des pièces à usiner (2).

3. Système de soudage par laser selon la revendication 2, dans lequel:
dans le premier état de fonctionnement, l'unité optique (10) est configurée pour ajuster le foyer du faisceau laser de sortie (11) dans un plan de la surface frontale (13a) de la pièce de pression (13; et
dans le deuxième état de fonctionnement, l'unité optique (10) est configurée pour ajuster le foyer du faisceau laser de sortie (11) dans un plan de la surface des pièces à usiner (2), situé à une distance de la pièce de pression (13).

4. Système de soudage par laser (1) selon l'une des revendications précédentes, dans lequel un verre de protection (17) est disposé entre l'arbre mécanique (12) et l'unité optique.

5. Système de soudage par laser (1) selon la revendication 4, dans lequel l'arbre mécanique (12) comprend une buse de soufflage destinée à diriger un flux de gaz sur le verre de protection.

6. Système de soudage par laser (1) selon l'une des revendications précédentes, dans lequel la pièce de pression (13) comprend une unité d'extraction des fumées destinée à extraire les fumées de soudage générées au cours du procédé de soudage.

7. Système de soudage par laser (1) selon l'une des revendications précédentes, le système de soudage par laser (1) comprenant en outre:
la source laser étant une source laser haute puissance fournissant un faisceau laser de sortie haute puissance;
le dispositif de positionnement (6) destiné à déplacer la tête de soudage laser par rapport aux pièces à usiner (2);
un dispositif de fixation destiné à maintenir les pièces à usiner (2); et
un système de commande destiné à commander le fonctionnement du système de soudage par laser (1).

8. Méthode de soudage par laser destinée au soudage de pièces à usiner (2), la méthode étant **caractérisée par** les étapes suivantes:
Le fonctionnement du système de soudage par laser (1) selon l'une des revendications 1 à 7 pour positionner la tête de soudage laser (3) par rapport aux pièces à usiner (2);
l'application d'une pression sur une surface des pièces à usiner (2) au moyen d'une surface frontale (13a) de la pièce de pression (13) de la tête de soudage laser (3), depuis le côté de la surface frontale, la pression étant appliquée par l'arbre mécanique (12) sur la surface des pièces à usiner (2) sur la base d'un signal du capteur de pression fourni par le capteur de pression;
le balayage d'une position d'un faisceau laser de sortie de la tête de soudage laser (3) sur la surface des pièces à usiner (2) tout en appliquant une pression sur la surface des pièces à usiner (2), pour réaliser un procédé de soudage par vis ; et
le relâchement de la pression exercée sur les pièces à usiner (2).
